# EUROPÄISCHE PATENTSCHRIFT

(11) **EP 2 625 427 B1**
(45) Veröffentlichungstag und Bekanntmachung des Hinweises auf die Patenterteilung: **21.06.2017**
(21) Anmeldenummer: 11770402.3
(22) Anmeldetag: 06.10.2011
(51) Int. Cl.: F04C 3/08

(54) **STRÖMUNGSGETRIEBE**
FLUID TRANSMISSION
TRANSMISSION HYDRAULIQUE

(30) Priorität: 08.10.2010 DE 102010042176; 20.12.2010 DE 102010063542
(43) Veröffentlichungstag der Anmeldung: 14.08.2013
(73) Patentinhaber: Robert Bosch GmbH, 70442 Stuttgart (DE)
(72) Erfinder: AMESOEDER, Dieter, 74321 Bietigheim-Bissingen (DE)
(86) Internationale Anmeldenummer: PCT/EP2011/067500
(87) Internationale Veröffentlichungsnummer: WO 2012/045837

(56) Entgegenhaltungen:
- FR-A- 1 159 193
- FR-A5- 2 205 944
- US-A- 2 485 240
- US-A1- 2001 031 215

## Beschreibung

Die vorliegende Erfindung betrifft ein Strömungsgetriebe gemäß dem Oberbegriff des Anspruches 1.

### Stand der Technik

Strömungsgetriebe werden zur gestuften oder zur stufenlosen Drehzahl- und/oder Drehmomentenwandlung eingesetzt. Eine erste Strömungsmaschine als Pumpe fördert dabei ein Fluid, z. B. Öl, und von dem von der ersten Strömungsmaschine geförderten Fluid wird eine zweite Strömungsmaschine als Motor angetrieben. Die erste Strömungsmaschine ist dabei von einer Antriebswelle angetrieben und die zweite Strömungsmaschine leitet die mechanische Energie mit einer Abtrittswelle ab. Dabei kann von Einrichtungen das Schluckvolumen pro Zeiteinheit der ersten und/oder der zweiten Strömungsmaschine unabhängig von der Drehzahl der Strömungsmaschinen verändert werden, so dass dadurch eine Drehzahl und Drehmomentenwandlung zwischen der Antriebswelle und der Abtriebswelle möglich ist. Hydrodynamische Strömungsgetriebe arbeiten mit einem niedrigeren Druck des Fluides und großen geförderten Fluidmengen pro Zeiteinheit. Hydrostatische Strömungsgetriebe als hydrostatische hydraulische Getriebe arbeiten dabei mit hohen Drücken des Fluides und geringen Mengen des geförderten Fluides pro Zeiteinheit. Dabei tritt bei hydrostatischen Strömungsgetrieben eine räumliche Trennung zwischen der ersten und zweiten Strömungsmaschine ein.

Ein hydrostatisches Strömungsgetriebe auf Basis von Innenzahnradmaschinen ist in der Druckschrift FR2205944 offenbart.

Die DE 882 934 zeigt ein Strömungsgetriebe mit zwei für das gleiche Drehzahlverhältnis ausgelegte, auf gleichem Achsmittel angeordneten und mit verschiedener mechanischer Übersetzung auf die Abtriebswelle treibenden Wandlern, wobei die Wandler spiegelbildlich nebeneinander liegend angeordnet und mit einem zwischen die beiden Wandler hineingreifenden Zahnradantrieb versehen sind, und dass ferner das Turbinenrad des einen Wandlers direkt mit einem Teil des neben diesem Wandler angeordneten Umlaufrädergetriebes und das Turbinenrad des anderen Wandlers mittels einer durch die beiden Wandler hindurch geführten Wellen mit dem anderen Teil des Umlaufrädergetriebes verbunden ist, während dessen dritter Teil feststehend ausgebildet ist.

### Offenbarung der Erfindung

### Vorteile der Erfindung

Das erfindungsgemäße Strömungsgetriebe wird durch die Merkmale von Anspruch 1 definiert.

Drehkolbenmaschinen weisen einen kompakten und kleinen Aufbau auf, so dass dadurch auch das Strömungsgetriebe in vorteilhafter Weise einen kompakten und kleinen Aufbau aufweist. Dadurch wird in vorteilhafter Weise von dem Strömungsgetriebe wenig Bauraum benötigt.

Insbesondere umfasst die Drehkolbenmaschine wenigstens ein Leistungsteil und wenigstens ein Absperrteil und das wenigstens eine Leistungs- und Absperrteil ist als eine axial und radial gelagerte Stirnzahnscheibe bzw. ein Stirnzahnkugelsegment mit Zähnen ausgebildet und das wenigstens eine Leistungs- und Absperrteil weist den gleichen radialen Dichtungsdurchmesser auf. Der radiale Dichtungsdurchmesser ist der Durchmesser an einer kugeligen Radialbegrenzung des wenigstens einen Leistungsteil und des wenigstens einen Absperrteils mit dem diese an einer teilkugeligen Innenwand dichtend gelagert sind.

In einer weiteren Ausgestaltung ist zwischen den Zähnen des wenigstens einen Leistungsteils und den Zähnen des wenigstens einen Absperrteils ein Arbeitsraum ausgebildet und/oder die erste und/oder zweite Strömungsmaschine umfasst ein Gehäuse und das wenigstens eine Leistungsteil und das wenigstens eine Absperrteil sind radial dichtend an dem Gehäuse gelagert und/oder ein zumindest linienförmiger Arbeitsraum begrenzender Formschluss zwischen Flanken und Zahnkämmen der einander gegenüberliegenden Zähne des wenigstens einen Leistungsteils und des wenigstens einen Absperrteils auftritt.

In einer ergänzenden Ausführungsform ist von dem wenigstens einen Leistungsteil und dem wenigstens einen Absperrteil eine Rotationsbewegung um eine Rotationsachse bzw. eine Drehachse ausführbar, insbesondere aufgrund einer Lagerung an dem Gehäuse, und die Rotationsachsen des wenigstens einen Leistungsteils und des wenigstens einen Absperrteils in einem Arbeitswinkel, vorzugsweise zwischen 1° oder 179°, insbesondere zwischen 5° oder 40°, zueinander ausgerichtet sind, wobei der Arbeitswinkel ungleich 180° ist, so dass das Volumen der Arbeitsräume zwischen dem rotierenden wenigstens einen Leistungsteil und dem rotierenden wenigstens einen Absperrteil zu- und abnimmt. Der Arbeitswinkel liegt beispielsweise im Bereich zwischen 1° und 40°, vorzugsweise zwischen 5° und 30°.

Vorzugsweise sind die Zähne des wenigstens einen Leistungsteils und/oder des wenigstens einen Absperrteils als Zykloidenverzahnung oder als Trochoidenverzahnung ausgebildet.

In einer Variante umfasst die Drehkolbenmaschine wenigstens ein Leistungsteil und wenigstens ein Absperrteil und das wenigstens eine Leistungsteil ist als ein rotierendes Arbeitsteil mit einer Gleitebene und mit der Gleitebene gegenüberliegenden Zähnen ausgebildet und das wenigstens eine Absperrteil ist als ein feststehendes Gehäuse, insbesondere Arbeitsraumgehäuse, ausgebildet mit Zähnen.

Zweckmäßig dient eine Welle als Antriebs- oder Abtriebsvorrichtung und von der Welle ist um eine Wellenrotationsachse eine Rotationsbewegung ausführbar und die Welle weist eine schiefe Gleitebene auf, so dass die Gleitebene in einem spitzen oder stumpfen Winkel zu der Wellenrotationsachse ausgerichtet ist.

In einer weiteren Ausführungsform weist das Gehäuse, insbesondere Arbeitsraumgehäuse, eine teilkugelige Innenwand auf und das Arbeitsteil weist eine kugelige Radialbegrenzung auf und die kugelige Radialbegrenzung ist an der teilkugeligen Innenwand dichtend gelagert, insbesondere gleitgelagert.

Insbesondere liegt die Gleitebene des Arbeitsteils auf der schiefen Gleitebene der Welle auf und aufgrund einer Rotationsbewegung der Welle und der Lagerung des Arbeitsteils an der teilkugeligen Innenwand ist von dem Arbeitsteil eine taumelnde Rotationsbewegung ausführbar und die Zähne des Arbeitsteils greifen in die Zähne des Gehäuses, so dass sich ein Arbeitsraum bzw. Arbeitsräume zwischen den Zähnen des Arbeitsteils und den Zähnen des Gehäuses vergrößert und verkleinert.

In einer weiteren Ausgestaltung sind die Zähne des Arbeitsteils und/oder die Zähne des Gehäuses als eine Zykloidenverzahnung oder als Trochoidenverzahnung ausgebildet.

In einer ergänzenden Variante umfasst die Drehkolbenmaschine wenigstens einen Zuleitungskanal, insbesondere Ringkanal, zur Zuführung des Fluides in den Arbeitsraum und wenigstens einen Ableitungskanal, insbesondere Ringkanal, zur Ableitung des Fluides aus dem Arbeitsraum und vorzugsweise mündet der wenigstens eine Zuleitungskanal und/oder der wenigstens eine Ableitungskanal in den wenigstens einen ersten und/oder zweiten Strömungskanal.

In einer weiteren Variante umfasst die Drehkolbenmaschine wenigstens zwei Zuleitungskanäle und/oder die Drehkolbenmaschine umfasst wenigstens zwei Ableitungskanäle und/oder das Strömungsgetriebe ist ein hydrostatisches Strömungsgetriebe.

In einer weiteren Ausgestaltung weist das Strömungsgetriebe wenigstens ein Stellorgan zur Veränderung der Strömungsquerschnittsfläche, insbesondere zum Öffnen und Schließen, von wenigstens einem, insbesondere der wenigstens zwei Zuleitungskanäle, pro Strömungsmaschine auf und/oder das Strömungsgetriebe weist wenigstens ein Stellorgan zur Veränderung der Strömungsquerschnittsfläche, insbesondere zum Öffnen und Schließen, von wenigstens einem, insbesondere der wenigstens zwei Ableitungskanäle, pro Strömungsmaschine auf, so dass das wenigstens eine Stellorgan die erste und/oder zweite Einrichtung zur Veränderung des Schluckvolumens pro Zeiteinheit bildet.

Das wenigstens eine Stellorgan verändert die Strömungsquerschnittsfläche von wenigstens einem Zuleitungskanal und bei einer Verkleinerung, insbesondere einem Schließen des wenigstens einen Zuleitungskanales, wird das durch den wenigstens einen Zuleitungskanal dem Strömungskanal zugeleitete Fluid wenigstens teilweise in eine Bypassleitung eingeleitet und anschließend zu der Strömungsmaschine zurückgeleitet. Dient der wenigstens eine Zuleitungskanal zur Zuleitung des Fluides, z. B. Öl oder Gas, von einer ersten Strömungsmaschine zu einer zweiten Strömungsmaschine, und damit stellt der Zuleitungskanal den Zuleitungskanal für die zweite Strömungsmaschine dar, wird von dem wenigstens einen Stellorgan das von der ersten Strömungsmaschine zur zweiten Strömungsmaschine geleitete Fluid teilweise, insbesondere vollständig, wieder zur ersten Strömungsmaschine zurückgeleitet. Diese Ausbildung des Bypasskanales gilt in analoger Weise auch für das wenigstens eine Stellorgan zur Veränderung der Strömungsquerschnittsfläche von wenigstens einem Ableitungskanal. Der wenigstens eine Ableitungskanal leitet beispielsweise Öl von einer ersten Strömungsmaschine zu einer zweiten Strömungsmaschine und dient somit als Ableitungskanal für die erste Strömungsmaschine. Mit Hilfe des wenigstens einen Stellorganes und dem Bypasskanal kann dabei ein Teil des von der ersten Strömungsmaschine abgeleiteten Öles wenigstens teilweise wieder zu der ersten Strömungsmaschine zurückgeleitet und damit nicht zu der zweiten Strömungsmaschine geleitet werden. Dadurch tritt ein Kurzschluss des Strömungskreislaufes zwischen der ersten und zweiten Strömungsmaschine auf. Wird beispielsweise das gesamte von der ersten zu der zweiten Strömungsmaschine zu leitende Öl von dem wenigstens einen Stellorgan vollständig wieder zur ersten Strömungsmaschine zurückgeleitet und ist die erste Strömungsmaschine beispielsweise die Pumpe und die zweite Strömungsmaschine der Motor, wird von der Pumpe keine Energie auf den Motor übertragen und die Kraftübertragung von der Antriebswelle auf die Abtriebswelle ist damit vollständig unterbrochen.

Insbesondere ist mit dem wenigstens einen Stellorgan das Schluckvolumens pro Zeiteinheit der ersten Strömungsmaschine unabhängig von einer Drehzahl des Leistungsteils veränderbar und damit bildet das wenigstens eine Stellorgan die erste Einrichtung und/oder mit dem wenigstens einen Stellorgan ist das Schluckvolumens pro Zeiteinheit der zweiten Strömungsmaschine unabhängig von einer Drehzahl des Leistungsteils veränderbar und bildet damit das wenigstens eine Stellorgan die zweite Einrichtung. Mit dem wenigstens einen Stellorgan kann somit die Drehzahl und der Drehmoment zwischen der Antriebsvorrichtung und der Abtriebsvorrichtung verändert werden, so dass dadurch ein mehrstufiges Strömungsgetriebe vorliegt.

In einer weiteren Ausgestaltung ist das wenigstens eine Stellorgan als wenigstens ein Ventil oder eine Schaltmatrize ausgebildet.

In einer zusätzlichen Ausgestaltung ist das Fluid eine Flüssigkeit, insbesondere Öl oder Gas.

In einer zusätzlichen Ausführungsform sind wenigstens zwei Stufen der Pumpe und/oder des Motors durch ineinandergreifende Zähne an einer äußeren und inneren Verzahnung gebildet und mit kugelförmigen Flächenabschnitten abgetrennt, die als Dichtflächen wirken.

In einer ergänzenden Variante ist das Strömungsgetriebe ein stufenloses Strömungsgetriebe oder ein Getriebe mit Stufen.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: einen Querschnitt einer Drehkolbenmaschine in einem ersten Ausführungsbeispiel,
- Fig. 2: einen vereinfachten Querschnitt eines Strömungsgetriebes in einem ersten Ausführungsbeispiel,
- Fig. 3: eine Explosionsdarstellung der Drehkolbenmaschine des Strömungsgetriebes gemäß Fig. 2,
- Fig. 4: einen Querschnitt der Drehkolbenmaschine in einem zweiten Ausführungsbeispiel,
- Fig. 5: einen vereinfachten Querschnitt des Strömungsgetriebes in einem zweiten Ausführungsbeispiel,
- Fig. 6: eine perspektivische Ansicht einer Schaltmatritze des Strömungsgetriebes gemäß Fig. 5 und
- Fig. 7: eine Explosionsdarstellung der Drehkolbenmaschine des Strömungsgetriebes gemäß Fig. 5.

### Ausführungsformen der Erfindung

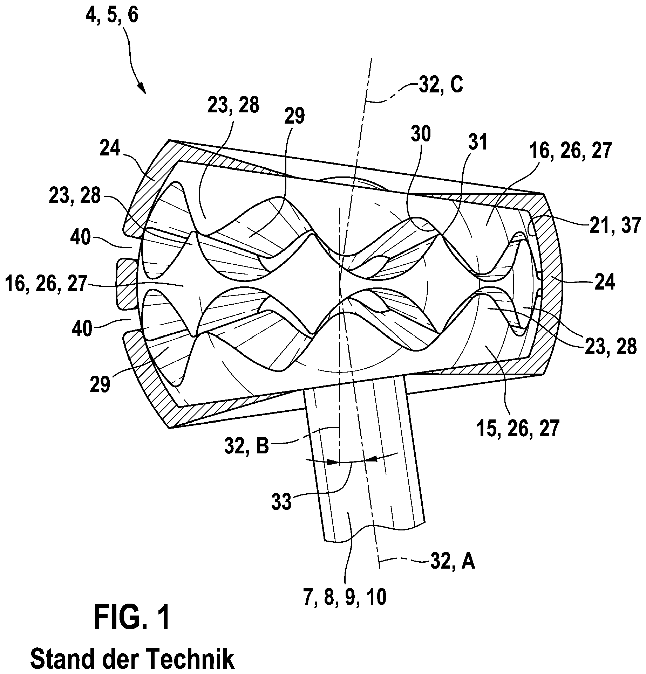

In Fig. 1 ist eine aus dem Stand der Technik, nämlich der WO 93/12325 bekannte Drehkolbenmaschine 6 dargestellt. Auf die WO 93/12325 wird Bezug genommen und deren Inhalt hiermit in diese Schutzrechtsanmeldung aufgenommen. Die Drehkolbenmaschine 6 kann dabei als Pumpe 4 oder als Motor 5 eingesetzt werden, d. h. als erste Strömungsmaschine 2 oder als zweite Strömungsmaschine 3 in einem Strömungsgetriebe 1. Die Drehkolbenmaschine 6 bzw. Drehkolbenströmungsmaschine 6 weist drei rotierende Stirnzahnscheiben 26 bzw. Stirnzahnkugelsegmente 27 auf. Die in Fig. 1 ganz oben und ganz unten dargestellte Stirnzahnscheibe 26 als Kegelzahnräder weisen nur an einer Seite Zähne 23 als Verzahnung auf mit einem zykloidenförmigen Verlauf der Zahnoberfläche im in Drehrichtung vorgenommenen Schnitt. Die zwischen der obersten und untersten Stirnzahnscheibe 26 angeordnete mittlere Stirnzahnscheibe 26 als Kegelzahnscheibe weist an beiden Seiten die Zähne 23 auf, ebenfalls als Zykloidenverzahnung 28 wie bei der oberen und unteren Stirnzahnscheibe 26 bzw. dem obersten und untersten Stirnzahnkugelsegment 27. Die Zähne 23 an beiden Seiten der mittleren Stirnzahnscheibe 26 kämmen dabei mit den Zähnen 23 der oberen und unteren Stirnzahnscheibe 26. Die mittlere Stirnzahnscheibe 26 als Kegelradscheibe weist beidseitig jeweils einen Zahn 23 weniger auf als die obere und untere Stirnzahnscheibe 26 als Kegelzahnrad. Dadurch ist eine unsymmetrische Anordnung der Zähne der mittleren Stirnzahnscheibe 26 bezüglich der Zähne 23 der oberen und unteren Stirnzahnscheibe 26 bedingt. Ein Gehäuse 24 der Drehkolbenmaschine 26 weist in einem Teilbereich eine teilkugelige Innenwand 37 auf. An der teilkugeligen Innenwand 37 ist somit das Gehäuse 24 sphärisch ausgebildet. An dieser teilkugeligen Innenwand 37 ist eine kugelige Radialbegrenzung 21 der drei Stirnzahnscheiben 26 als Gleitlagerung gelagert. Dadurch sind die rotierenden Stirnzahnscheiben 26 fluiddicht bezüglich des Gehäuses 24 an der teilkugeligen Innenwand 37 abgedichtet. Das Gehäuse 24 weist außerdem zwei Öffnungen als Ringkanäle 40 auf zur Zuführung und Ableitung des Fluides von und zu der Drehkolbenmaschine 6.

Die in Fig. 1 unten dargestellte Stirnzahnscheibe 26 ist mit einer als Antriebswelle 8 ausgebildeten Antriebsvorrichtung 7 verbunden. Die Antriebswelle 8 ist dabei von einem nicht dargestellten Motor, z. B. einem Elektro- oder Verbrennungsmotor, angetrieben. Dadurch kann von dem Elektro- oder Verbrennungsmotor die in Fig. 1 unten dargestellte Stirnzahnscheibe 26 in einer Rotationsbewegung um eine Rotationsachse 32 versetzt werden. Die Rotationsachse 32 der in Fig. 1 dargestellten untersten Stirnzahnscheibe 26 entspricht dabei auch der Rotationsachse der Antriebswelle 8 und diese Rotationsachse ist in Fig. 1 zusätzlich mit dem Buchstaben A versehen. Damit stellt die in Fig. 1 unten dargestellte Stirnzahnscheibe 26 ein Leistungsteil 15 der Drehkolbenmaschine 6 dar. Aufgrund des Ineinandergreifens der Zähne 23 des Leistungsteiles 15 und der Zähne 23 der in Fig. 1 dargestellten mittleren und oberen Stirnzahnscheibe 26 werden auch die mittlere und obere Stirnzahnscheibe 26 in eine Rotationsbewegung um die Rotationsachse 32 versetzt und damit stellt die in Fig. 1 dargestellte mittlere und obere Stirnzahnscheibe 26 ein Absperrteil 16 der Drehkolbenmaschine 6 dar. Die Rotationsachse 32 der mittleren Stirnzahnscheibe 26 ist in Fig. 1 zusätzlich mit dem Buchstaben B versehen und die Rotationsachse 32 der oberen Stirnzahnscheibe 26 ist zusätzlich mit der Zahl C in Fig. 1 gekennzeichnet. Die Rotationsachse 32 der unteren Stirnzahnscheibe 26 als Kegelzahnrad ist dabei bezüglich der Rotationsachse der mittleren Stirnzahnscheibe 26 als Kegelradscheibe um einen bestimmten Arbeitswinkel 33 geneigt. Dies gilt analog für die Rotationsachse 32 zwischen der obersten und mittleren Stirnzahnscheibe 26. Zwischen der obersten und mittleren Stirnzahnscheibe 26 sowie zwischen der mittleren und unteren Stirnzahnscheibe 26 bildet sich jeweils ein Arbeitsraum 29 aus. Der Arbeitsraum 29 weist dabei gemäß der Darstellung in Fig. 1 auf der linken Seite ein maximales Volumen auf und auf der rechten Seite ein minimales Volumen. Zahnkämme 31 der Zähne 23 der mittleren Stirnzahnscheibe 26 gleiten unter konstanter linienförmiger Formschlussbewegung mit Flanken 30 der Zähne 23 der obersten und untersten Stirnzahnscheibe 26 und begrenzen und ändern damit die jeweilige Arbeitsräume 29. Dadurch bildet sich bei der Drehkolbenmaschine 6 bei einer Verwendung als Pumpe 4 bei einem Abschnitt des Arbeitsraumes 29 bzw. der Arbeitsräume 29 mit zunehmendem Volumen eine Saugseite der Pumpe 4 und bei ein Abschnitt des Arbeitsraumes 29 bzw. der Arbeitsräume 29 mit einem abnehmenden Volumen als Druckseite der Pumpe 4 aus. Somit können durch den Ringkanal 40 das zu fördernde Fluid angesaugt und eingeleitet werden sowie abgeleitet und abgepumpt werden.

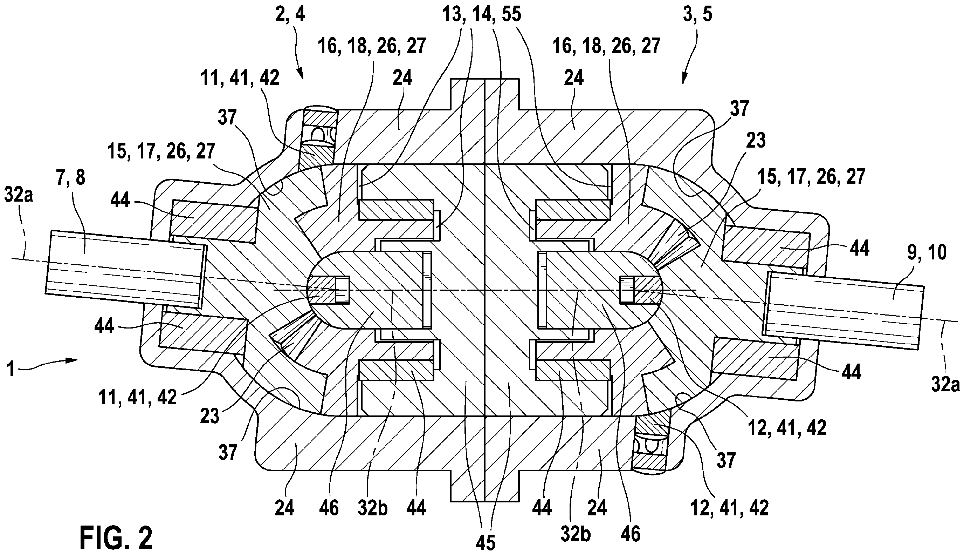

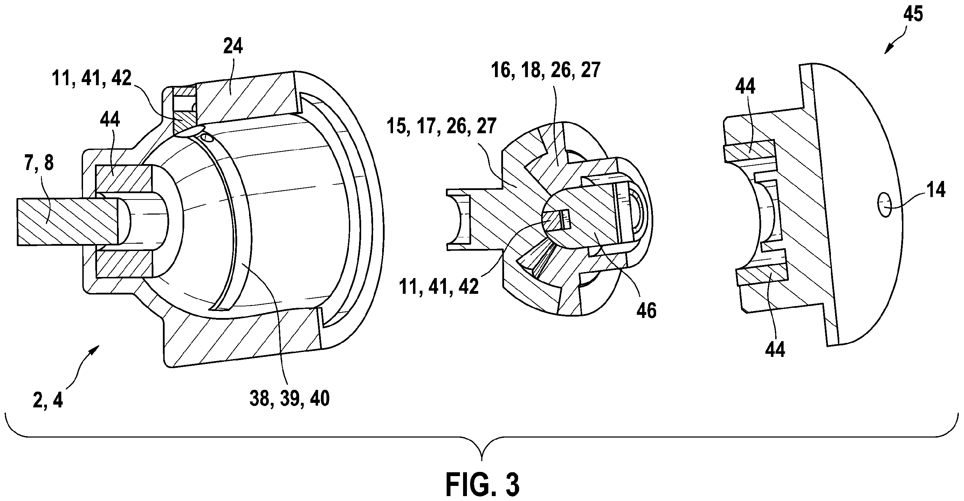

In Fig. 2 und 3 ist ein erstes Ausführungsbeispiel des Strömungsgetriebes 1 als hydraulisches Getriebe dargestellt. Das Strömungsgetriebe 1 mit der ersten und zweiten Strömungsmaschine 2, 3 die jeweils als Pumpe 4 oder Motor 5 arbeiten sind dabei in ähnlicher Weise wie die in Fig. 1 dargestellte Drehkolbenmaschine 6 ausgebildet. Die erste und zweite Strömungsmaschine 2, 3 des Strömungsgetriebes 1 stellen damit eine Drehkolbenmaschine 6 dar. Dabei weisen die erste und zweite Drehkolbenmaschine 2, 3 gemäß der Darstellung in Fig. 2 ein Leistungsteil 15 und im Unterschied zu der Drehkolbenmaschine 6 gemäß Fig. 1 nur ein Absperrteil 16 dar. Das Leistungsteil 15 als Stirnzahnscheibe 26 ist mit der Antriebswelle 8 verbunden und führt eine Rotationsbewegung um die Rotationsachse 32a aus. Das Leistungsteil 15 stellt dabei einen Rotor 17 dar mit Zähnen 23. Die Zähne 23 des Rotors 17 greifen dabei in die Zähne 23 eines Gegenrotors 18 ebenfalls als Stirnzahnscheibe 26 ausgebildet. Der Gegenrotor 18 führt dadurch aufgrund des Ineinandergreifens und des Formschlusses der Zähne 23 des Rotors 17 und des Gegenrotors 18 ebenfalls eine Rotationsbewegung um die Rotationsachse 32b auf, wobei die Rotationsachse 32b des Gegenrotors 18 in einem Arbeitswinkel zu der Rotationsachse 32a des Rotors 17 ausgerichtet ist. Die Rotationsachsen 32a, 32b des Rotors 17 und des Gegenrotors 18 sind somit nicht parallel und in einem spitzen Winkel, beispielsweise im Bereich zwischen 5° und 30°, zueinander ausgerichtet. Ein Gehäuse 24 der Strömungsmaschine 1 weist in analoger Weise zu dem Ausführungsbeispiel der Drehkolbenmaschine 6 gemäß Fig. 1 eine teilkugelige Innenwand 37 auf und an der teilkugeligen Innenwand 37 des Gehäuses 24 ist flüssigkeits- bzw. fluiddicht die kugelige Radialbegrenzung 21 des Rotors 17 und des Gegenrotors 18 gelagert. Die in Fig. 2 rechts dargestellte zweite Strömungsmaschine 3 ist in analoger Weise wie die erste Strömungsmaschine 2 ausgebildet. Die zweite Strömungsmaschine 3 stellt dabei den Motor 5 dar und der Rotor 17 stellt dabei das Leistungsteil 15 dar, welches von dem von der Pumpe 4 geförderten Fluid, insbesondere Öl, angetrieben ist. Der Rotor 17 als Leistungsteil 15 der zweiten Strömungsmaschine 3 ist dabei mit einer Abtriebswelle 10 als Abtriebsvorrichtung 9 verbunden. Die Rotationsachse 32a der Abtriebswelle 10 und des Rotors 17 ist in einem Arbeitswinkel zu de Rotationsachse 32b des Gegenrotors 18 bzw. Absperrteils 16 ausgerichtet.

Die beiden Rotoren 17 sind ferner mittels eines Lagers 44 an dem Gehäuse 24 gelagert und innerhalb des zweiteiligen Gehäuses 24, jeweils für die erste und zweite Strömungsmaschine 2, 3 sind ferner zwei Zwischendeckel 45 für jede Strömungsmaschine 2, 3 angeordnet (Fig. 2 und 3). Ferner ist zwischen dem Zwischendeckel 45 und dem Rotor 17 jeweils ein Steuerbolzen 46 angeordnet für jede Strömungsmaschine 2, 3 (Fig. 2 und 3). Der Gegenrotor 18 jeder Strömungsmaschine 2, 3 ist außerdem mit dem Lager 44 an dem Zwischendeckel 45 gelagert. Innerhalb des Gehäuses 24 bzw. der beiden Teile des Gehäuses 24 bilden sich Mittelräume 55 aus und die Mittelräume 55 dienen dabei entweder als erster Strömungskanal 13 zum Leiten des Fluides von der ersten Strömungsmaschine 2 zur zweiten Strömungsmaschine 3 oder als zweiter Strömungskanal 14 zum Leiten des Fluides von der zweiten Strömungsmaschine 3 zu der ersten Strömungsmaschine 2. Der Zwischendeckel 45 ist mit dem ersten und zweiten Strömungskanal 13, 14 ausgebildet, von dem in Fig. 3 nur der zweite Strömungskanal 14 abgebildet ist. In dem Gehäuse 24 jeder Strömungsmaschine 2, 3 sind außerdem Ringkanäle 40 als Ableitungskanal 39 oder als Zuleitungskanal 38 für das Fluid ausgebildet. In
Fig. 3 ist lediglich der Ringkanal 40 als Ableitungskanal 39 dargestellt, der jedoch in analoger Weise auch an einer anderen Stelle des Gehäuses 24 auch als Zuleitungskanal 38 für das von der ersten und zweiten Strömungsmaschine 2, 3 geförderte Fluid dienen kann. An dem Gehäuse 24 ist der an den Ringkanal 40 sich anschließende Ableitungskanal 39 (Fig. 2 und 3) von einem als Ventil 42 ausgebildeten Stellorgan 41 verschließbar und öffenbar. In analoger Weise ist auch an dem Steuerbolzen 46 das Ventil 42 zum Öffnen und Schließen des Ableitungskanales 39 der ersten Strömungsmaschine 2 vorhanden. Dies gilt analog auch für die zweite Strömungsmaschine 3. Bei einem geschlossenen Ventil 42, d. h. bei einem geschlossenen Ableitungskanal 39, wird das durch den Ableitungskanal 39 durchströmende Fluid nicht zu der zweiten Strömungsmaschine 3 geleitet, sondern durch einen nicht dargestellten Bypasskanal wieder dem Zuleitungskanal 38 zugeführt und dadurch ein Kurzschluss der Förderung zwischen der ersten und zweiten Strömungsmaschine 2, 3 teilweise herbeigeführt. Bei einem Schließen des Ventils 42 am Gehäuse 24 wird das von dem Rotor 17 der ersten Strömungsmaschine 2 geförderte Fluid, insbesondere Öl, nicht zu der zweiten Strömungsmaschine 3, d. h. dem Motor 5, gepumpt, sondern wieder als Kurzschluss durch den Bypasskanal zu der ersten Strömungsmaschine 2. Dies gilt analog auch für das zweite Ventil 42 an dem Steuerbolzen 46, welches den Gegenrotor 18 kurzschließen kann. Damit sind an der ersten Strömungsmaschine 2 drei Schaltstellungen möglich. Entweder arbeitet nur eine äußerer Verzahnung von Rotor 17 und Gegenrotor 18 oder es arbeitet nur eine innere Verzahnung von Rotor 17 und Gegenrotor 18 oder es arbeitet die innere und äußerer Verzahnung des Rotors 17 und Gegenrotors 18 und fördern somit Öl von der ersten Strömungsmaschine 2 zu der zweiten Strömungsmaschine 3. Dadurch kann das Schluckvolumen pro Zeiteinheit der ersten Strömungsmaschine unabhängig von der Drehzahl des Rotors 17 und des Gegenrotors 18 verändert werden und dadurch unterschiedliche Getriebestufen mit dem Strömungsgetriebe 1 zwischen der Antriebswelle 8 und der Abtriebswelle 10 erreicht werden. In analoger Weise wie bei der ersten Strömungsmaschine 2 als Pumpe können auch an der zweiten Strömungsmaschine 3 als Motor 5 mit den beiden Ventilen 42 bei Schaltstufen der zweiten Strömungsmaschine 3 erreicht werden. Damit ist es insgesamt möglich, mit dem Strömungsgetriebe 1 drei mal drei d. h. neun Getriebestufen zur Verfügung zu stellen. Sind in der ersten oder zweiten Strömungsmaschine 2, 3 beide Ventile 42 gleichzeitig geschlossen, tritt keine Kraftübertragung von der Antriebswelle 8 zu der Abtriebswelle 10 auf. Die Ventile 42 an der ersten Strömungsmaschine 2 stellen damit eine erste Einrichtung 11 zur Veränderung des Schluckvolumens pro Zeiteinheit unabhängig von der Drehzahl der ersten Strömungsmaschine 2 dar und die Ventile 42 an der zweiten Strömungsmaschine 3 stellen damit eine zweite Einrichtung zur Veränderung des Schluckvolumens der zweiten Strömungsmaschine 3 pro Zeiteinheit unabhängig von der Drehzahl der zweiten Strömungsmaschine 3 dar.

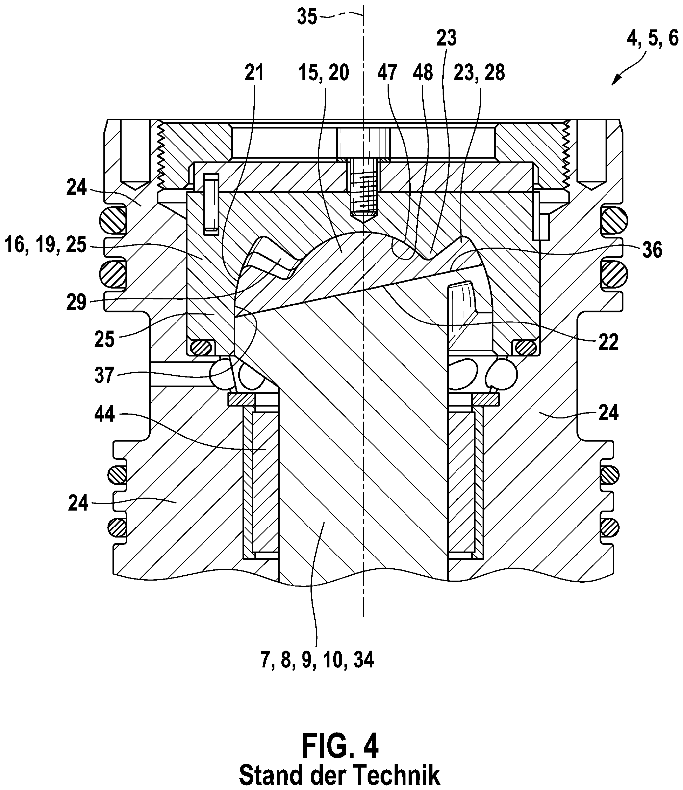

In Fig. 4 ist eine aus dem Stand der Technik, nämlich der WO 2008/110 155 A1 bekannte Drehkolbenmaschine 6 dargestellt. Auf die WO 2008/110 155 A1 wird Bezug genommen und deren Inhalt hiermit in diese Schutzrechtsanmeldung aufgenommen. Die aus dem Stand der Technik bekannte Drehkolbenmaschine 6 kann dabei als Pumpe 4 oder als Motor 5 eingesetzt werden. Innerhalb des Gehäuses 24 ist ein Arbeitsraumgehäuse 25 mit Zähnen 23 angeordnet. Das Arbeitsraumgehäuse 25 ist feststehend und führt somit keine Rotationsbewegung aus. Damit stellt das Arbeitsraumgehäuse 25 einen Stator 19 und das Absperrteil 16 dar. Eine Welle 34 führt um eine Wellenrotationsachse 35 eine Rotationsbewegung aus. Die Welle 34 kann dabei entweder eine Antriebswelle 8 oder eine Abtriebswelle 10 darstellen, je nach dem, ob die Drehkolbenmaschine 6 als Pumpe 4 oder als Motor 5 eingesetzt wird. Die
Welle 34 weist dabei eine schiefe Gleitebene 36 auf. Die schiefe Gleitebene 36 ist dabei in einem spitzen Winkel zu der Wellenrotationsachse 35 ausgerichtet. Zwischen der schiefen Gleitebene 36 und dem Arbeitsraumgehäuse 25 mit Zähnen 23 ist ein Arbeitsteil 20 als Leitungsteil 15 angeordnet. Das Arbeitsteil 20 weist dabei eine Gleitebene 22 auf und die Gleitebene 22 liegt auf der schiefen Gleitebene 36 der Welle 34 auf. An der der Gleitebene 22 gegenüber liegenden Seite des Arbeitsteiles 20 sind ebenfalls Zähne 23 ausgebildet. Die Zähne 23 des Arbeitsteils 20 als auch die Zähne 23 des Arbeitsraumgehäuses 25 sind dabei jeweils als Zykloidenverzahnung 28 ausgebildet. Das Arbeitsteil 20 weist die kugelige Radialbegrenzung 21 auf und das Arbeitsraumgehäuse 25 weist außerdem auch die teilkugelige Innenwand 37 auf. Dadurch ist das Arbeitsteil 20 mittels einer Gleitlagerung zwischen der teilkugeligen Innenwand 37 und der kugeligen Radialbegrenzung 21 fluiddicht gelagert. Bei einer Rotationsbewegung 34 der Welle 34 führt das Arbeitsteil 20 eine taumelnde Rotationsbewegung aus, wobei die Zähne 23 des Arbeitsteiles 20 zwischen die Zähne 23 des Arbeitsraumgehäuses 25 greifen. Zwischen den Zähnen 23 des Arbeitsraumgehäuses 25 und den Zähnen 23 des Arbeitsteiles 20 bildet sich der Arbeitsraum 29 aus. Bei dieser taumelnden Rotationsbewegung des Arbeitsteiles 20 vergrößern und verkleinern sich die Arbeitsräume 29 zwischen dem Arbeitsraumgehäuse 25 und dem Arbeitsteil 20, so dass die Drehkolbenmaschine 6 durch entsprechende Zu- und Ableitungskanäle (nicht dargestellt) sowohl als Pumpe 4 als auch Motor 5 eingesetzt werden kann. Bei einer Verwendung der Drehkolbenmaschine 6 gemäß der Darstellung in Fig. 4 als Pumpe 4 stellt das Arbeitsteil 20 das Leistungsteil 15 dar und dies gilt analog auch bei einem Einsatz als Motor 5.

Das Arbeitsraumgehäuse 25 weist ferner an einem Teilabschnitt eine Teilkugelrundung 48 auf die sphärisch ausgebildet ist und das Arbeitsteil 20 weis an einem Teilabschnitt den Teilkugelflächenabschnitt 47 auf, der ebenfalls sphärisch ausgebildet ist. Mittels des Teilkugelflächenabschnittes 47 des Arbeitsteiles 20 ist das Arbeitsteil 20 zusätzlich mittels einer Gleitlagerung an der Teilkugelrundung 48 des Arbeitsraumgehäuses 25 gelagert.

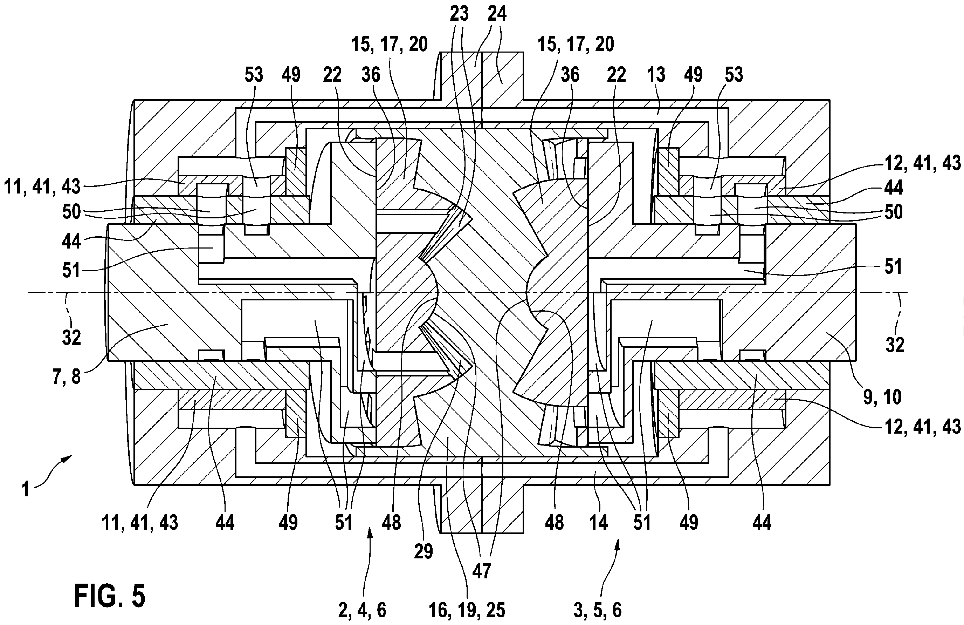

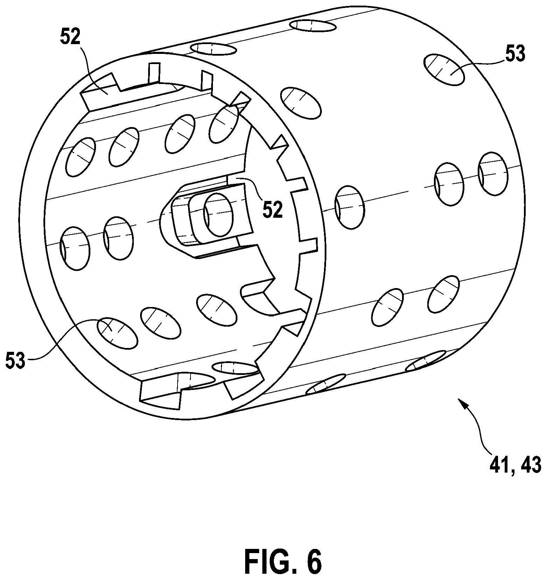

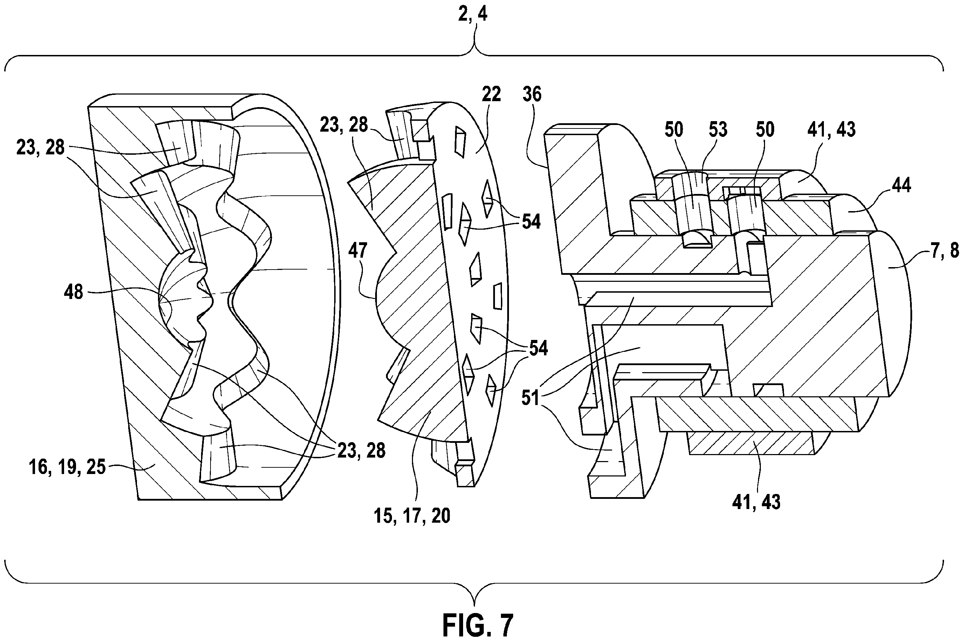

In Fig. 5 bis 7 ist ein zweites Ausführungsbeispiel des Strömungsgetriebes 1 dargestellt. Das Strömungsgetriebe 1 in diesem zweiten Ausführungsbeispiel weist in analoger Weise zu dem Strömungsgetriebe 1 gemäß dem ersten Ausführungsbeispiel eine erste und zweite Strömungsmaschine 2, 3 auf. Die erste Strömungsmaschine 2 dient dabei als Pumpe 4 und ist von der Antriebswelle 8 angetrieben und die zweite Strömungsmaschine 3 dient als Motor 5 und treibt die Abtriebswelle 10 an. Die erste und zweite Strömungsmaschine 2, 3 ist dabei im Wesentlichen wie die in Fig. 4 abgebildete Drehkolbenmaschine 6 ausgebildet. An der Antriebswelle 8 ist die schiefe Gleitebene 36 vorhanden, auf der die Gleitebene 22 des Arbeitsteiles 20 aufliegt. An der der Gleitebene 22 gegenüberliegenden Seite des Arbeitsteiles 20 sind die Zähne 23 ausgebildet (Fig. 7). Das Gehäuse 24 des Strömungsgetriebes 1 ist zweiteilig, so dass für die erste und zweite Strömungsmaschine 2, 3 jeweils ein Gehäuse 24 als separates Bauteil zur Verfügung steht. Innerhalb dieses Gehäuses 24 ist das Arbeitsraumgehäuse 25 als Stator 19 vorhanden (Fig. 5 und 7). Das Arbeitsraumgehäuse 25 bzw. der Stator 19 weist dabei Zähne 23 auf. Die im Bereich der Teilkugelrundung 48 angeordneten Zähne 23 stellen dabei eine innere Verzahnung dar und die gemäß der Darstellung in Fig. 7 näher an dem Arbeitsteil 20 angeordneten Zähne 23 stellen eine äußere Verzahnung dar. Die äußere Verzahnung bildet somit eine erste Fördergruppe und die innere Verzahnung bildet eine zweite Fördergruppe. In dem Arbeitsteil 20 sind ferner Steueröffnungen 54 angeordnet. Die Antriebswelle 8 bzw. die Abtriebswelle 10 weist dabei Kanäle 51 auf. Die Kanäle 51 enden dabei an einem ersten Endbereich der schiefen Gleitebene 36. Dadurch kann Öl als Fluid aus einem Arbeitsraum 29 zwischen dem Arbeitsraumgehäuse 25 und dem eine taumelnde Rotationsbewegung ausführenden Arbeitsteil 20 in die Arbeitsräume 29 zu- und abgeleitet werden. Die Enden der Kanäle 51 an der schiefen Gleitebene 36 sind dabei im Wesentlichen halbkreisförmig ausgerichtet oder ausgebildet. Die Antriebs- bzw. Abtriebswelle 8, 10 ist dabei mittels des Lagers 44 an dem Gehäuse 24 gelagert. Ferner ist zwischen dem Lager 44 und dem Gehäuse 24 die Schaltmatritze 43 (Fig. 5 bis 7) angeordnet. Die Schaltmatritze 43 weist dabei Matritzenöffnungen 53 und Matritzenkanäle 52 auf. Das Lager 44 zwischen der Schaltmatritze 43 als Stellorgan 41 und der Antriebs- oder Abtriebswelle 8, 10 weist außerdem Bohrungen 50 auf. Damit kann an einem anderen Endabschnitt der Kanäle 51 in der Antriebs- und Abtriebswelle 8, 10 das Fluid durch das Lager 44 hindurchtreten und durch die Matritzenöffnungen 53 und/oder die Matrizenkanäle 52 aus- oder eingeleitet werden. Das aus der Schaltmatritze 43 ein- oder ausgeleitete Fluid wird anschließend der jeweils anderen Strömungsmaschine 2, 3 zugeleitet oder von der anderen Strömungsmaschine der entsprechenden Strömungsmaschine 2, 3 zugeleitet. Das Lager 44 zwischen der Antriebswelle 8 und der Abtriebswelle 10 sowie der Schaltmatritze 43 ist außerdem auch mittels eines Lagerringes 49 an dem Gehäuse 24 gelagert. Der Lagerring 49 weist dabei nicht dargestellte Öffnungen auf, durch die das Fluid in den Raum zwischen dem Lager 44 und dem Gehäuse 24 eintritt. Dadurch kann das Fluid, hier beispielsweise Öl aus dem ersten oder zweiten Strömungskanal 13, 14 der ersten oder zweiten Strömungsmaschine 2, 3 zugeleitet werden.

Das Lager 44 weist zwei Bohrungen 50 auf. Bei verschiedenen Stellungen nach einer Rotationsbewegung der Schaltmatritze 43 kann entweder nur eine Bohrung 50, nur eine andere Bohrung 50 oder beide Bohrungen 50 dahingehend die Strömung des Fluides durch die beiden Bohrungen 50 und damit auch durch die beiden Kanäle 51 in der Antriebs- und Abtriebswelle 8, 10 verändert werden, dass entweder nur die äußere Verzahnung von Rotor 17 und Stator 19 Arbeit verrichtet oder nur die innere Verzahnung von Rotor 17 und Stator 19 Arbeit verrichtet oder die äußere und innere Verzahnung von Rotor 17 und Stator 19 Arbeit verrichtet. Das Fluid wird dabei in analoger Weise zu dem ersten Ausführungsbeispiel gemäß Fig. 2, falls eine Bohrung 50 als Ableitungskanal 39 dient, einem Bypasskanal (nicht dargestellt) zugeführt, so dass die entsprechende Strömungsmaschine 2, 3 kurzgeschlossen ist. Dadurch kann bei jeder der beiden Strömungsmaschinen 2, 3 das Schluckvolumen pro Zeiteinheit unabhängig von der Drehzahl verändert werden, so dass die Schaltmatritze 43 das Stellorgan 41 und die erste und zweite Einrichtung 11, 12 zur Veränderung der Schluckvolumens pro Zeiteinheit in der ersten und zweiten Strömungsmaschine 2, 3 darstellt. In analoger Weise zu dem ersten Ausführungsbeispiel wird das von der Pumpe 4 geförderte Fluid durch den ersten Strömungskanal 13 zu dem Motor 5 geleitet und durch den zweiten Strömungskanal 14 von dem Motor 5 zu der Pumpe 4 geleitet. Aufgrund der insgesamt möglichen drei Schaltstellungen je Strömungsmaschine 2, 3 sind insgesamt drei mal drei, d. h. neun Getriebestufen möglich. Bei einer entsprechenden Stellung der Schaltmatritze 43 kann auch der Kraftschluss zwischen der Antriebswelle 8 und der Abtriebswelle 10 vollständig unterbrochen werden

In einem zusätzlichen nicht dargestellten Ausführungsbeispiel des Strömungsgetriebes 1, welches im Wesentlichen dem in Fig. 2 dargestellten Strömungsgetriebe 1 entspricht, weisen die erste und zweite Strömungsmaschine analog zu der Drehkolbenmaschine gemäß Fig. 1 ein Leistungsteil 15 und zwei Absperrteile 16 auf, d. h. insgesamt drei Stirnzahnscheiben 26. Damit sind bei jeder der beiden Strömungsmaschine 2, 3 sieben Schalt- oder Förderstufen möglich, so dass mit einem derartigen Strömungsgetriebe 1 insgesamt sieben mal sieben, d. h. neunundvierzig Getriebestufen möglich sind.

Insgesamt betrachtet sind mit dem erfindungsgemäßen Strömungsgetriebe 1 wesentliche Vorteile verbunden. In dem Strömungsgetriebe 1 als hydrostatischen und hydraulischen Getriebe 1 werden Drehkolbenmaschinen 6 eingesetzt. Die Drehkolbenmaschinen 6 weisen einen kompakten und kleinen Aufbau, benötigen wenig herzustellende Bauteile und können damit in verschiedenen technischen Anwendungen gut eingesetzt werden, weil sei einerseits wartungsfrei sind und andererseits der erforderliche Bauraum für das Strömungsgetriebe 1 gering ist.

## Patentansprüche

1. Strömungsgetriebe (1) zur Drehzahl- und/oder Drehmomentenwandlung von einer Antriebswelle (8) zu einer Abtriebswelle (10) des Strömungsgetriebes (1), umfassend
- eine erste Strömungsmaschine (2) als Pumpe (4) zum Fördern eines Fluides,
- eine zweite Strömungsmaschine (3) als Motor (5) zur Umwandlung von Energie des mit der ersten Strömungsmaschine (2) geförderten Fluides in mechanische Energie,
- die Antriebswelle (8) zur Übertragung von mechanischer Energie auf die erste Strömungsmaschine (2),
- die Abtriebswelle (10), zur Abführung von mechanischer Energie von der zweiten Strömungsmaschine (3),
- wenigstens einen ersten Strömungskanal (13) zum Leiten des Fluides von der ersten Strömungsmaschine (2) zu der zweiten Strömungsmaschine (3),
- wenigstens einen zweiten Strömungskanal (14) zum Leiten des Fluides von der zweiten Strömungsmaschine (3) zu der ersten Strömungsmaschine (2),
- wobei die erste und die zweite Strömungsmaschine (2, 3) eine Drehkolbenmaschine (6) ist,
**dadurch gekennzeichnet, dass**
die Drehkolbenmaschine (6) jeweils einen Rotor (17) und einen Gegenrotor (18) oder jeweils einen Stator (19) und einen Rotor (20) umfasst, wobei der Rotor (17) und der Gegenrotor (18) oder der Stator (19) und der Rotor (20) jeweils eine innere Verzahnung und eine äußere Verzahnung aufweisen, wobei die Zähne (23) der inneren und äußeren Verzahnung als Zykloiden- oder Trochoidenverzahnung (28) ausgebildet sind, wobei jeweils wenigstens ein Stellorgan (41,42,43) vorgesehen ist, das derart ausgebildet ist, dass entweder nur die äußere Verzahnung oder nur die innere Verzahnung oder äußere und innere Verzahnung von Rotor (17) und Gegenrotor (18) bzw. Stator (19) und Rotor (20) arbeitet und Fluid von der ersten Strömungsmaschine (2) zu der zweiten Strömungsmaschine (3) fördert.

2. Strömungsgetriebe nach Anspruch 1, **dadurch gekennzeichnet, dass**
die Drehkolbenmaschine (6) wenigstens ein Leistungsteil (15) und wenigstens ein Absperrteil (16) umfasst und das wenigstens eine Leistungs- und Absperrteil (15, 16) als eine axial und radial gelagerte Stirnzahnscheibe (26) bzw. ein Stirnzahnkugelsegment (27) mit Zähnen (23) ausgebildet ist und das wenigstens eine Leistungs- und Absperrteil (15, 16) den gleichen radialen Dichtungsdurchmesser aufweist.

3. Strömungsgetriebe nach Anspruch 2, **dadurch gekennzeichnet, dass**
zwischen den Zähnen (23) des wenigstens einen Leistungsteils (15) und den Zähnen (23) des wenigstens einen Absperrteils (16) ein Arbeitsraum (29) ausgebildet ist
und/oder
die erste und/oder zweite Strömungsmaschine (2, 3) ein Gehäuse (24) umfasst und das wenigstens eine Leistungsteil (15) und das wenigstens eine Absperrteil (16) radial dichtend an dem Gehäuse (24) gelagert sind und/oder
ein zumindest linienförmiger arbeitsraumbegrenzender Formschluss zwischen Flanken (30) und Zahnkämmen (31) der einander gegenüberliegenden Zähne (23) des wenigstens einen Leistungsteils (15) und des wenigstens einen Absperrteils (16) auftritt.

4. Strömungsgetriebe nach Anspruch 2 oder 3, **dadurch gekennzeichnet, dass**
von dem wenigstens einen Leistungsteil (15) und dem wenigstens einen Absperrteil (16) eine Rotationsbewegung um eine Rotationsachse (32) bzw. eine Drehachse (32) ausführbar ist, insbesondere aufgrund einer Lagerung an dem Gehäuse (24), und die Rotationsachsen (32) des wenigstens einen Leistungsteils (15) und des wenigstens einen Absperrteils (16) in einem Arbeitswinkel, vorzugsweise zwischen 1° oder 179°, insbesondere zwischen 5° oder 40°, zueinander ausgerichtet sind, wobei der Arbeitswinkel ungleich 180° ist, so dass das Volumen der Arbeitsräume (29) zwischen dem rotierenden wenigstens einen Leistungsteil (15) und dem rotierenden wenigstens einen Absperrteil (16) zu- und abnimmt.

5. Strömungsgetriebe nach einem oder mehreren der Ansprüche 2 bis 4, **dadurch gekennzeichnet, dass**
die Zähne (23) des wenigstens einen Leistungsteils (15) und/oder des wenigstens einen Absperrteils (16) als Zykloidenverzahnung (28) ausgebildet sind.

6. Strömungsgetriebe nach Anspruch 1, **dadurch gekennzeichnet, dass**
die Drehkolbenmaschine (6) wenigstens ein Leistungsteil (15) und wenigstens ein Absperrteil (16) umfasst und das wenigstens eine Leistungsteil (15) als ein rotierendes Arbeitsteil (20) mit einer Gleitebene (22) und mit der Gleitebene (22) gegenüberliegenden Zähnen (23) ausgebildet ist und das wenigstens eine Absperrteil (16) als ein feststehendes Gehäuse (24), insbesondere Arbeitsraumgehäuse (25), ausgebildet ist mit Zähnen (23).

7. Strömungsgetriebe nach Anspruch 6, **dadurch gekennzeichnet, dass**
eine Welle (34) als Antriebs- oder Abtriebsvorrichtung (7, 9) dient und von der Welle (34) um eine Wellenrotationsachse (35) eine Rotationsbewegung ausführbar ist und die Welle (34) eine schiefe Gleitebene (36) aufweist, so dass die schiefe Gleitebene (36) in einem spitzen oder stumpfen Winkel zu der Wellenrotationsachse (35) ausgerichtet ist.

8. Strömungsgetriebe nach Anspruch 6 oder 7, **dadurch gekennzeichnet, dass**
das Gehäuse (24), insbesondere Arbeitsraumgehäuse (25), eine teilkugelige Innenwand (37) aufweist und das Arbeitsteil (20) eine kugelige Radialbegrenzung (21) aufweist und die kugelige Radialbegrenzung (21) an der teilkugeligen Innenwand (37) dichtend gelagert, insbesondere gleitgelagert, ist.

9. Strömungsgetriebe nach Anspruch 8, **dadurch gekennzeichnet, dass**
die Gleitebene (22) des Arbeitsteils (20) auf der schiefen Gleitebene (36) der Welle (34) aufliegt und aufgrund einer Rotationsbewegung der Welle (34) und der Lagerung des Arbeitsteils (20) an der teilkugeligen Innenwand (37) von dem Arbeitsteil (20) eine taumelnde Rotationsbewegung ausführbar ist und die Zähne (23) des Arbeitsteils (20) in die Zähne (23) des Gehäuses (24) greifen, so dass sich ein Arbeitsraum (29) zwischen den Zähnen (23) des Arbeitsteils (20) und den Zähnen (23) des Gehäuses (23) vergrößert und verkleinert.

10. Strömungsgetriebe nach einem oder mehreren der Ansprüche 6 bis 9, **dadurch gekennzeichnet, dass**
die Zähne (23) des Arbeitsteils und/oder die Zähne (23) des Gehäuses (24) als eine Zykloidenverzahnung (28) ausgebildet sind.

11. Strömungsgetriebe nach einem oder mehreren der vorhergehenden Ansprüche, **dadurch gekennzeichnet, dass**
die Drehkolbenmaschine (6) wenigstens einen Zuleitungskanal (38), insbesondere Ringkanal (40), zur Zuführung des Fluides in den Arbeitsraum (29) und wenigstens einen Ableitungskanal (39), insbesondere Ringkanal (40), zur Ableitung des Fluides aus dem Arbeitsraum (29) umfasst
und vorzugsweise
der wenigstens eine Zuleitungskanal (38) und/oder der wenigstens eine Ableitungskanal (39) in den wenigstens einen ersten und/oder zweiten Strömungskanal (13, 14) mündet.

12. Strömungsgetriebe nach einem oder mehreren der vorhergehenden Ansprüche, **dadurch gekennzeichnet, dass**
die Drehkolbenmaschine (6) wenigstens zwei Zuleitungskanäle (38) umfasst und/oder
die Drehkolbenmaschine (6) wenigstens zwei Ableitungskanäle (39) umfasst und/oder
das Strömungsgetriebe (1) ein hydrostatisches Strömungsgetriebe (1) ist.

13. Strömungsgetriebe nach einem oder mehreren der vorhergehenden Ansprüche, **dadurch gekennzeichnet, dass**
das Strömungsgetriebe (1) wenigstens ein Stellorgan (41) zur Veränderung der Strömungsquerschnittsfläche, insbesondere zum Öffnen und Schließen, von wenigstens einem, insbesondere der wenigstens zwei Zuleitungskanäle (38), pro Strömungsmaschine (2, 3) aufweist und/oder
das Strömungsgetriebe (1) wenigstens ein Stellorgan (41) zur Veränderung der Strömungsquerschnittsfläche, insbesondere zum Öffnen und Schließen, von wenigstens einem, insbesondere der wenigstens zwei Ableitungskanäle (39), pro Strömungsmaschine (2, 3) aufweist,
so dass das wenigstens eine Stellorgan (41) eine erste und/oder zweite Einrichtung (11, 12) zur Veränderung des Schluckvolumens pro Zeiteinheit bildet.

14. Strömungsgetriebe nach Anspruch 13, **dadurch gekennzeichnet, dass** mit dem wenigstens einen Stellorgan (41) das Schluckvolumens pro Zeiteinheit der ersten Strömungsmaschine (2) unabhängig von einer Drehzahl des Leistungsteils (15) veränderbar ist und damit das wenigstens eine Stellorgan (41) die erste Einrichtung (11) bildet und/oder
mit dem wenigstens einen Stellorgan (41) das Schluckvolumens pro Zeiteinheit der zweiten Strömungsmaschine (3) unabhängig von einer Drehzahl des Leistungsteils (15) veränderbar ist und damit das wenigstens eine Stellorgan (41) die zweite Einrichtung (12) bildet.

15. Strömungsgetriebe nach Anspruch 13 oder 14, **dadurch gekennzeichnet, dass**
das wenigstens eine Stellorgan (41) als wenigstens ein Ventil (42) oder eine Schaltmatrize (43) ausgebildet ist.

## Claims

1. Fluid transmission (1) for the rotational-speed and/or torque conversion from a drive shaft (8) to an output shaft (10) of the fluid transmission (1), comprising
- a first turbo-machine (2) as a pump (4) for conveying a fluid,
- a second turbo-machine (3) as a motor (5) for converting energy of the fluid conveyed by the first turbo-machine (2) into mechanical energy,
- the drive shaft (8) for transferring mechanical energy to the first turbo-machine (2),
- the output shaft (10) for removing mechanical energy from the second turbo-machine (3),
- at least one first flow channel (13) for guiding the fluid from the first turbo-machine (2) to the second turbo-machine (3),
- at least one second flow channel (14) for guiding the fluid from the second turbo-machine (3) to the first turbo-machine (2),
- the first and the second turbo-machine (2, 3) being a rotating piston machine (6),
**characterized in that**
the rotating piston machine (6) in each case comprises a rotor (17) and a reaction rotor (18) or in each case comprises a stator (19) and a rotor (20), the rotor (17) and the reaction rotor (18) or the stator (19) and the rotor (20) in each case having an inner toothing and an outer toothing, the teeth (23) of the inner and outer toothing being designed as a cycloidal or trochoidal toothing (28), in each case at least one actuating element (41, 42, 43) being provided which is designed in such a manner that either only the outer toothing or only the inner toothing or outer and inner toothing of rotor (17) and reaction rotor (18) or stator (19) and rotor (20) performs work and conveys fluid from the first turbo-machine (2) to the second turbo-machine (3).

2. Fluid transmission according to Claim 1, **characterized in that**
the rotating piston machine (6) comprises at least one power part (15) and at least one shut-off part (16) and the at least one power and shut-off part (15, 16) is designed as an axially and radially mounted spur-toothed disc (26) or a spur-toothed spherical segment (27) with teeth (23) and the at least one power and shut-off part (15, 16) has the same radial sealing diameter.

3. Fluid transmission according to Claim 2, **characterized in that**
a working space (29) is formed between the teeth (23) of the at least one power part (15) and the teeth (23) of the at least one shut-off part (16) and/or
the first and/or second turbo-machine (2, 3) comprises a housing (24) and the at least one power part (15) and the at least one shut-off part (16) are mounted on the housing (24) in a radially sealing manner
and/or
an at least linear, working-space-delimiting form fit between flanks (30) and tooth crests (31) of the teeth (23) opposite one another of the at least one power part (15) and of the at least one shut-off part (16) occurs.

4. Fluid transmission according to Claim 2 or 3, **characterized in that**
a rotation movement can be performed by the at least one power part (15) and the at least one shut-off part (16) around an axis of rotation (32), in particular because of a mounting on the housing (24), and the axes of rotation (32) of the at least one power part (15) and of the at least one shut-off part (16) are oriented with respect to one another at a working angle, preferably between 1° and 179°, in particular between 5° and 40°, the working angle not being equal to 180°, such that the volume of the working spaces (29) between the rotating at least one power part (15) and the rotating at least one shut-off part (16) increases and decreases.

5. Fluid transmission according to one or several of Claims 2 to 4, **characterized in that**
the teeth (23) of the at least one power part (15) and/or of the at least one shut-off part (16) are designed as a cycloidal toothing (28).

6. Fluid transmission according to Claim 1, **characterized in that**
the rotating piston machine (6) comprises at least one power part (15) and at least one shut-off part (16) and the at least one power part (15) is designed as a rotating working part (20) having a sliding plane (22) and having teeth (23) opposite the sliding plane (22) and the at least one shut-off part (16) is designed as a fixed housing (24), in particular a working-space housing (25), with teeth (23).

7. Fluid transmission according to Claim 6, **characterized in that**
a shaft (34) serves as a drive or output device (7, 9) and a rotational movement can be performed by the shaft (34) around a shaft axis of rotation (35) and the shaft (34) has an inclined sliding plane (36), such that the inclined sliding plane (36) is oriented with respect to the shaft axis of rotation (35) at an acute or an obtuse angle.

8. Fluid transmission according to Claim 6 or 7, **characterized in that**
the housing (24), in particular working-space housing (25), has a partially spherical inner wall (37) and the working part (20) has a spherical radial delimitation (21) and the spherical radial delimitation (21) is mounted, in particular slidingly mounted, in a sealing manner on the partially spherical inner wall (37).

9. Fluid transmission according to Claim 8, **characterized in that**
the sliding plane (22) of the working part (20) bears on the inclined sliding plane (36) of the shaft (34) and, because of a rotational movement of the shaft (34) and the mounting of the working part (20) on the partially spherical inner wall (37), a wobbling rotational movement can be performed by the working part (20) and the teeth (23) of the working part (20) engage into the teeth (23) of the housing (24), such that a working space (29) between the teeth (23) of the working part (20) and the teeth (23) of the housing (23) increases in size and decreases in size.

10. Fluid transmission according to one or several of Claims 6 to 9, **characterized in that**
the teeth (23) of the working part and/or the teeth (23) of the housing (24) are designed as a cycloidal toothing (28).

11. Fluid transmission according to one or several of
the preceding claims, **characterized in that** the rotating piston machine (6) comprises at least one feeding channel (38), in particular ring channel (40), for feeding the fluid into the working space (29) and at least one discharge channel (39), in particular ring channel (40), for discharging the fluid from the working space (29), and preferably,
the at least one feeding channel (38) and/or the at least one discharge channel (39) opens into the at least one first and/or second flow channel (13, 14).

12. Fluid transmission according to one or several of the preceding claims, **characterized in that**
the rotating piston machine (6) comprises at least two feeding channels (38) and/or
the rotating piston machine (6) comprises at least two discharge channels (39) and/or
the fluid transmission (1) is a hydrostatic fluid transmission (1).

13. Fluid transmission according to one or several of the preceding claims, **characterized in that**
the fluid transmission (1) has, per turbo-machine (2, 3), at least one actuating element (41) for the changing of the flow cross-sectional area, in particular for the opening and closing, of at least one, in particular of the at least two feeding channels (38)
and/or
the fluid transmission (1) has, per turbo-machine (2, 3), at least one actuating element (41) for the changing of the flow cross-sectional area, in particular for the opening and closing, of at least one, in particular of the at least two discharge channels (39),
such that the at least one actuating element (41) forms a first and/or second device (11, 12) for changing the intake volume per unit time.

14. Fluid transmission according to Claim 13, **characterized in that**,
with the at least one actuating element (41), it is possible to change the intake volume per unit time of the first turbo-machine (2) independently of a rotational speed of the power part (15) and the at least one actuating element (41) thereby forms the first device (11)
and/or,
with the at least one actuating element (41), it is possible to change the intake volume per unit time of the second turbo-machine (3) independently of a rotational speed of the power part (15) and the at least one actuating element (41) thereby forms the second device (12).

15. Fluid transmission according to Claim 13 or 14, **characterized in that**
the at least one actuating element (41) is designed as at least a valve (42) or a switching matrix (43).

## Revendications

1. Transmission hydraulique (1) pour la conversion de vitesse de rotation et/ou de couple d'un arbre d'entraînement (8) à un arbre de sortie (10) de la transmission hydraulique (1), comprenant:
- une première turbomachine (2) comme pompe (4) pour le refoulement d'un fluide,
- une deuxième turbomachine (3) comme moteur (5) pour la conversion d'énergie du fluide refoulé avec la première turbomachine en énergie mécanique,
- un arbre d'entraînement (8) pour la transmission d'énergie mécanique à la première turbomachine (2),
- un arbre de sortie (10), pour le transfert d'énergie mécanique de la deuxième turbomachine (3),
- au moins un premier canal d'écoulement (13) pour conduire le fluide de la première turbomachine (2) à la deuxième turbomachine (3),
- au moins un deuxième canal d'écoulement (14) pour conduire le fluide de la deuxième turbomachine (3) à la première turbomachine (2),
- dans laquelle la première et la deuxième turbomachines (2, 3) sont chacune une machine à piston rotatif (6),
**caractérisée en ce que** la machine à piston rotatif (6) comprend respectivement un rotor (17) et un contre-rotor (18) ou respectivement un stator (19) et un rotor (20), dans laquelle le rotor (17) et le contre-rotor (18) ou le stator (19) et le rotor (20) présentent respectivement une denture intérieure et une denture extérieure, dans laquelle les dents (23) de la denture intérieure et extérieure sont réalisées sous la forme de denture cycloïdale ou trochoïdale (28), dans laquelle il est prévu respectivement au moins un organe de réglage (41, 42, 43) qui est réalisé de telle manière que soit seule la denture extérieure soit seule la denture intérieure soit les dentures extérieure et intérieure du rotor (17) et du contre-rotor (18) ou du stator (19) et du rotor (20) travaille(nt) et refoule(nt) du fluide de la première turbomachine (2) à la deuxième turbomachine (3).

2. Transmission hydraulique selon la revendication 1, **caractérisée en ce que** la machine à piston rotatif (6) comprend au moins une partie de puissance (15) et au moins une partie d'arrêt (16) et ladite au moins une partie de puissance et d'arrêt (15, 16) est réalisée sous la forme d'un disque à denture droite (26) supporté axialement et radialement ou d'un segment de sphère à denture droite (27) avec des dents (23), et ladite au moins une partie de puissance et d'arrêt (15, 16) présente le même diamètre d'étanchéité radial.

3. Transmission hydraulique selon la revendication 2, **caractérisée en ce qu'**une chambre de travail (29) est formée entre les dents (23) de ladite au moins une partie de puissance (15) et les dents (23) de ladite au moins une partie d'arrêt (16), et/ou la première et/ou la deuxième turbomachine (2, 3) comprend un boîtier (24) et ladite au moins une partie de puissance (15) et ladite au moins une partie d'arrêt (16) sont montées de façon étanche radialement dans le boîtier (24), et/ou il se produit une liaison par emboîtement au moins linéaire limitant la chambre de travail entre des flancs (30) et des pointes de dent (31) des dents opposées l'une à l'autre (23) de ladite au moins une partie de puissance (15) et de ladite au moins une partie d'arrêt (16).

4. Transmission hydraulique selon la revendication 2 ou 3, **caractérisée en ce qu'**un mouvement de rotation autour d'un axe de rotation (32) ou d'un axe de révolution (32) peut être exécuté par ladite au moins une partie de puissance (15) et ladite au moins une partie d'arrêt (16), en particulier en raison d'un montage sur le boîtier (24), et les axes de rotation (32) de ladite au moins une partie de puissance (15) et de la ladite au moins une partie d'arrêt (16) sont orientés l'un par rapport à l'autre sous un angle de travail, de préférence entre 1° ou 179°, en particulier entre 5° ou 40°, dans laquelle l'angle de travail est différent de 180°, de telle manière que le volume des chambres de travail (29) entre ladite au moins une partie de puissance tournante (15) et ladite au moins une partie d'arrêt tournante (16) augmente et diminue.

5. Transmission hydraulique selon une ou plusieurs des revendications 2 à 4, **caractérisée en ce que** les dents (23) de ladite au moins une partie de puissance (15) et/ou de ladite au moins une partie d'arrêt (16) sont réalisées sous la forme d'une denture cycloïdale (28).

6. Transmission hydraulique selon la revendication 1, **caractérisée en ce que** la machine à piston rotatif (6) comprend au moins une partie de puissance (15) et au moins une partie d'arrêt (16) et ladite au moins une partie de puissance (15) est constituée par une partie de travail tournante (20) avec un plan de glissement (22) et des dents (23) opposées au plan de glissement (22) et ladite au moins une partie d'arrêt (16) est constituée par un boîtier fixe (24), en particulier un boîtier de chambre de travail (25), avec des dents (23).

7. Transmission hydraulique selon la revendication 6, **caractérisée en ce qu'**un arbre (34) sert de dispositif d'entraînement ou de sortie (7, 9) et un mouvement de rotation autour d'un axe de rotation d'arbre (35) peut être exécuté par l'arbre (34) et l'arbre (34) présente un plan de glissement oblique (36), de telle manière que le plan de glissement oblique (36) soit orienté sous un angle aigu ou obtus par rapport à l'axe de rotation de l'arbre (35).

8. Transmission hydraulique selon la revendication 6 ou 7, **caractérisé en ce que** le boîtier (24), en particulier le boîtier de chambre de travail (25), présente une paroi intérieure partiellement sphérique (37), et la partie de travail (20) présente une paroi de limitation radiale sphérique (21) et la paroi de limitation radiale sphérique (21) est supportée de façon étanche, en particulier supportée de façon glissante, sur la paroi intérieure partiellement sphérique (37).

9. Transmission hydraulique selon la revendication 8, **caractérisée en ce que** le plan de glissement (22) de la partie de travail (20) repose sur le plan de glissement oblique (36) de l'arbre (34) et un mouvement rotatif de nutation peut être exécuté par la partie de travail (20) en raison d'un mouvement de rotation de l'arbre (34) et de l'appui de la partie de travail (20) sur la paroi interne partiellement sphérique (37) et les dents (23) de la partie de travail (20) engrènent dans les dents (23) du boîtier (24), de telle manière qu'une chambre de travail (29) entre les dents (23) de la partie de travail (20) et les dents (23) du boîtier (23) augmente et diminue.

10. Transmission hydraulique selon une ou plusieurs des revendications 6 à 9, **caractérisée en ce que** les dents (23) de la partie de travail et/ou les dents (23) du boîtier (24) sont réalisées sous la forme d'une denture cycloïdale (28).

11. Transmission hydraulique selon une ou plusieurs des revendications précédentes, **caractérisée en ce que** la machine à piston rotatif (6) comprend au moins un canal d'arrivée (38), en particulier le canal annulaire (40), pour la fourniture du fluide dans la chambre de travail (29) et au moins un canal de départ (39), en particulier le canal annulaire (40), pour l'évacuation du fluide hors de la chambre de travail (29), et de préférence ledit au moins un canal d'arrivée (38) et/ou ledit au moins un canal de retour (39) débouche dans ledit au moins un premier et/ou deuxième canal d'écoulement (13, 14).

12. Transmission hydraulique selon une ou plusieurs des revendications précédentes, **caractérisée en ce que** la machine à piston rotatif (6) comprend au moins deux canaux d'arrivée (38) et/ou la machine à piston rotatif (6) comprend au moins deux canaux de retour (39), et/ou la machine à piston rotatif (6) est une transmission hydraulique hydrostatique (1).

13. Transmission hydraulique selon une ou plusieurs des revendications précédentes, **caractérisée en ce que** la transmission hydraulique (1) présente au moins un organe de réglage (41) pour le changement de l'aire de la section d'écoulement, en particulier pour l'ouverture et la fermeture, d'au moins un, en particulier des au moins deux canaux d'arrivée (38), par turbomachine (2, 3), et/ou la transmission hydraulique (1) présente au moins un organe de réglage (41) pour le changement de l'aire de la section d'écoulement, en particulier pour l'ouverture et la fermeture, d'au moins un, en particulier des au moins deux canaux de retour (39), par turbomachine (2, 3), de telle manière que ledit au moins un organe de réglage (41) forme un premier et/ou un deuxième dispositifs (11, 12) pour le changement du volume absorbé par unité de temps.

14. Transmission hydraulique selon la revendication 13, **caractérisée en ce que** le volume absorbé par unité de temps de la première turbomachine (2) peut être modifié avec ledit au moins un organe de réglage (41) indépendamment d'une vitesse de rotation de la partie de puissance (15) et ledit au moins un organe de réglage (41) forme ainsi le premier dispositif (11), et/ou le volume absorbé par unité de temps de la deuxième turbomachine (3) peut être modifié avec ledit au moins un organe de réglage (41) indépendamment d'une vitesse de rotation de la partie de puissance (15) et ledit au moins un organe de réglage (41) forme ainsi le deuxième dispositif (12).

15. Transmission hydraulique selon la revendication 13 ou 14, **caractérisée en ce que** ledit au moins un organe de réglage (41) est réalisé sous la forme d'au moins une soupape (42) ou d'une matrice de commutation (43).
